# EUROPEAN PATENT APPLICATION

(11) **EP 1 431 100 A2**
(43) Date of publication of application: **23.06.2004**
(21) Application number: 03104815.0
(22) Date of filing: 19.12.2003
(51) Int. Cl.: B60K 37/00

(54) **Device for adjusting the position of an instrument panel in a vehicle**

(30) Priority: 19.12.2002 SE 2037604
(71) Applicant: Scania CV AB, 151 87 Södertälje (SE)
(72) Inventor: Nyberg, Richard, 641 35, Katrineholm (SE)
(74) Representative: Sjögren, Stina

(57) **Abstract**

The present invention relates to a device for adjusting the positio n of an instrument panel (10) in a vehicle. The device comprises a permanent connection (11) between a steering control (1) and the instrument panel (10) so that adjustment of the position of the steering control (1) causes a corresponding adjustment of the position of the instrument panel (10). The device comprises at least one support means (15, 16) which is variable in length and which has an extent between the instrument panel (10) and a portion (3) of the vehicle. The support means (15, 16) comprises a locking mechanism (15a, 16a) which in a locked first position prevents length variation of the support means (15, 16) so that the latter provides support for the instrument panel (10) relative to said portion (3) of the vehicle, and that in an unlocked second state it allows length variation of the support means (15, 16).

## Description

### BACKGROUND TO THE INVENTION, AND STATE OF THE ART

The invention relates to a device for adjusting the position of an instrument panel in a vehicle according to the preamble of claim 1.

The instrument panel in a vehicle needs to be oriented so that the driver during operation of the vehicle can with good precision read the instruments arranged on the instrument panel without loss of concentration towards surrounding traffic. Such factors as the individual driver's stature and the setting of the driving seat result in different drivers' eyes being in relatively different positions with respect to the instrument panel. This makes it difficult for many drivers to read the instruments on the instrument panel with good precision. The steering wheel in most vehicles is fitted with an adjusting mechanism which allows adjustable setting of the steering wheel to a desired height position and a desired rotational position. In general it may be noted that the steering wheel needs to be arranged at a certain distance from the instrument panel in order to make it easier to operate knobs, buttons and other controls. In many cases, the rotational position of the steering wheel is also related to a correct rotational position of the instrument panel. In some countries, as in Germany, there are therefore recommendations that the instrument panel should be synchronously settable together with the vehicle's steering wheel.

DE 196 24 003 refers to a driving location in a vehicle. In that case the driving location comprises an arrangement which enables combined setting of the driving seat, the steering wheel and the instrument panel in order to provide the driver with an ergonomically optimum driving position. The steering wheel is fastened to the instrument panel. The steering wheel and the instrument panel are therefore connected together in a predetermined mutual relationship. The steering wheel and the instrument panel are thus pivotable together about an articulation to a desired rotational position. The arrangement provides electrical transmission of the steering wheel's steering movements. Transmitting the steering wheel's steering movements mechanically with that arrangement would probably be very difficult to achieve.

### SUMMARY OF THE INVENTION

The object of the present invention is to provide a device which makes it possible for an instrument panel to be held securely in a desired position when the instrument panel together with the steering control have been adjusted to a desired position by means of an adjusting mechanism.

The object stated above is achieved with the arrangement mentioned in the introduction which is characterised by what is indicated in the characterising part of claim 1. There is usually a relationship between the position of the steering wheel and a suitable position of the instrument panel for a driver. To make it easier to operate knobs, buttons and other controls on the instrument panel, the steering control and the instrument panel need to be situated at a certain distance from one another. A tall driver usually desires a somewhat more upright rotational position of the steering wheel than a shorter driver, and a more upright rotational position of the instrument panel in order to be able to read more easily the instruments on the instrument panel. The permanent connection between the instrument panel and the steering control maintains a certain mutual siting between the instrument panel and the steering control. When the steering control is adjusted to a new position, a corresponding adjustment is thus imparted to the instrument panel. The steering control is usually a steering wheel. The permanent connection between the instrument panel and the steering wheel provides a support point for the instrument panel. An instrument panel is usually relatively elongate in shape and a single firm support point for the instrument panel is therefore usually not sufficient, for example, to prevent the instrument panel tending to vibrate during operation of the vehicle. According to the present invention, at least one support means with a locking mechanism is therefore arranged between the instrument panel and a support surface of the vehicle. The fact that the support means is variable in length means that when the locking mechanism is in an unlocked position the instrument panel can move synchronously with the steering control to a desired position without this movement being hindered by the support means. When the steering control and the instrument panel reach a desired position, the locking mechanism is activated and the support means is locked. The length of the support means cannot change when it is in its locked state. The support means in the locked state therefore provides a firm connection between the instrument panel and a suitable portion of the vehicle. One or more such support means suitably located provide the instrument panel with a number of support points so that vibrations during operation of the vehicle can be substantially entirely prevented.

According to a preferred embodiment of the present invention, the instrument panel comprises a frame structure which itself comprises said permanent connection with the adjusting mechanism. The frame structure gives the instrument panel a rigidity which also makes it easier for the instrument panel to be held securely in a desired position. The frame structure preferably constitutes a lower portion of the instrument panel which, in a fitted state, supports other parts of the instrument panel. With advantage, the support means is connected to the instrument panel via the frame structure. The result is a stable connection between the support means and the instrument panel.

According to another preferred embodiment of the invention, the device comprises a control means which is so arranged that in a first state it enables locking of the steering control in a set position, and in a second state it enables adjustment of the steering control to a desired position. Such a control means is advantageously situated close to the driver. The control means may take the form of a lever or some other suitable form of control arranged for movement between the first state and the second state. The second state preferably allows movement of the steering control and the instrument panel both to a desired height position and to a desired rotational position. When the steering control and the instrument panel reach a desired position, the driver switches the control means to the first state so that the steering control and the instrument panel are locked firmly in the desired position. With advantage, the control means, in the first state, is also arranged to prevent change of length of the support means and, in the second state, to allow change of length of the support means. This means that a single control means can be used both for allowing movement of the steering control and for allowing change of length of the support means.

According to another preferred embodiment of the present invention, the support means is a gas cylinder which is variable in length. Such gas cylinders provided with a locking mechanism are conventional and are used in various technical contexts. Even in the unlocked state, the gas cylinder exerts a resistance which makes it necessary to apply a certain force in order to shift the instrument panel. However, the resistance of the gas cylinder is such that it is easy for the driver to overcome it so that the steering control and the instrument panel can be shifted manually to a desired position. The adjusting mechanism preferably also comprises at least one gas cylinder which is variable in length and which has a locking mechanism making it possible to lock the steering control in a set position. The same type of gas cylinders as are used as support means may with advantage also be used for mutual locking of moving parts of the adjusting mechanism. The control means may be connected to said gas cylinders by a mechanical motion-transmitting mechanism. Such a mechanical motion-transmitting mechanism may comprise a wire mechanism or a link arm mechanism. Alternatively, the indicated state of the control means may be transmitted in the form of an electrical control signal to the locking mechanism or be transmitted by means of a hydraulic/pneumatic arrangement.

According to another preferred embodiment of the present invention, the adjusting mechanism comprises a first element permanently connected to a stationary portion of the vehicle, a second element arranged for linear movement relative to the first portion, and a third element which is connected to the steering control and arranged for rotation relative to the second portion. Such an adjusting mechanism is conventional and is used to make it possible to set the position of a steering wheel in a vehicle. When the driver switches the control means to the second state, the steering wheel can be moved manually to a desired height position and be pivoted to a desired rotational position. When the steering wheel is in the desired position, the control means is switched back to the first state so that the steering wheel is locked in the desired position. With advantage, said permanent connection is arranged between the third element of the adjusting mechanism and the instrument panel. As the steering control is fastened to the third element, the instrument panel therefore has imparted to it a movement corresponding to that of the steering wheel, i.e. both a linear movement and a pivoting movement.

### BRIEF DESCRIPTION OF THE DRAWINGS

A preferred embodiment of the invention is described below by way of example with reference to the attached drawings, in which:
- Fig. 1: depicts an embodiment of a device according to the present invention and
- Fig. 2: depicts the frame structure in Fig. 1 as seen from above.

### DETAILED DESCRIPTION OF A PREFERRED EMBODIMENT OF THE INVENTION

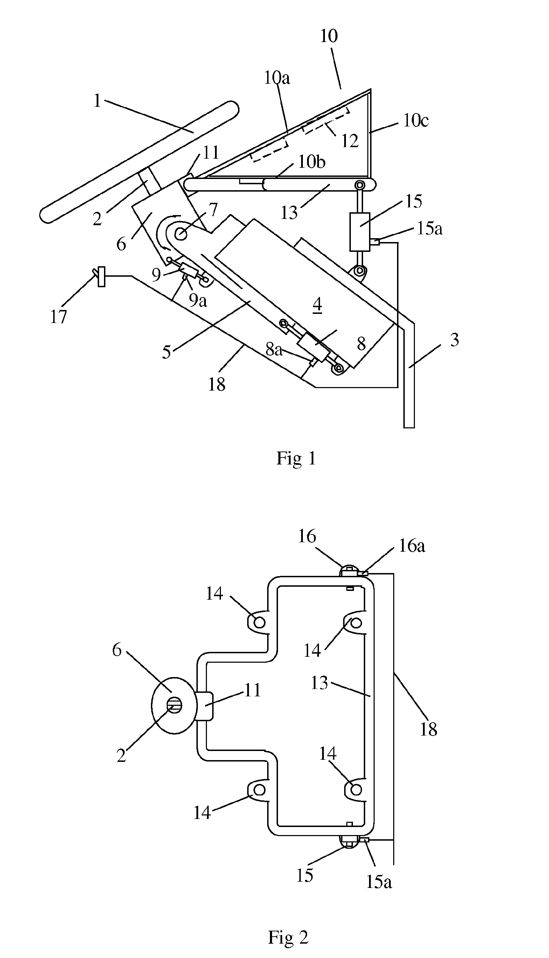

Fig. 1 depicts a steering control in a vehicle in the form of a steering wheel 1. From the steering wheel 1 a steering column 2 extends, which comprises a first portion of a motion-transmitting mechanism for transmitting steering movements of the steering wheel 1 to the vehicle's steerable wheels. The steering wheel 1 is settable in a desired position relative to a stationary portion 3 of the vehicle by means of an adjusting mechanism. The adjusting mechanism comprises a first element 4 permanently connected to the stationary portion 3, a second element 5 arranged for movement relative to the first element 4, and a third element in the form of a bearing housing 6 in which the steering wheel 1 is supported for rotation. The bearing housing 6 is arranged to pivot, via an articulation 7, relative to the second element 5. A first gas cylinder 8 has a first end fastened articulatedly in the first element 4 and a second end fastened articulatedly in the second element 5.

The gas cylinder 8 is variable in length and comprises a locking mechanism 8a which enables it to be locked in substantially any desired state. The gas cylinder has an internal resistance which has to be overcome in order to change its length. A second gas cylinder 9 has a first end articulatedly fastened in the second element 5 and a second end articulatedly fastened in the third element 6. The gas cylinder 9 is likewise variable in length and comprises a locking mechanism 9a enabling it to be locked in substantially any desired state. The gas cylinder 9 has likewise an internal resistance which has to be overcome in order to change its length. The gas cylinders 8, 9 described above are conventional and are used in various technical contexts, so any more detailed description of their construction is likely to be superfluous.

The bearing housing 6, which is the element situated uppermost of the adjusting mechanism, is connected to an instrument panel 10 via a permanent connection 11. The steering wheel 1 and the instrument panel 10 are permanently connected together so that an adjusting movement of the steering wheel 1 causes a corresponding adjusting movement of the instrument panel 10. The instrument panel 10 comprises an upper portion 10a which itself comprises a number of instruments 12. The instrument panel 10 also comprises a lower portion 10b and at least one vertical element 10c which connects together the upper portion 10a and the lower portion 10b. The vertical element 10c connects the upper portion 10a and the lower portion 10b on the side of the instrument panel which faces away from the steering wheel 1. The upper portion 10a is thus at an angle relative to the lower portion 10b. The instrument panel 10 also comprises a frame structure 13 on which the lower portion 10b is fitted. The frame structure 13 is arranged to provide the instrument panel 10 with necessary rigidity.
The permanent connection 11 connects the bearing housing 6 to the frame structure 13 of the instrument panel 10.

Fig. 2 depicts the frame structure 13 as seen from above. The frame structure 13 has a closed shape and extends substantially round the lower portion 10b on the latter's underside. The frame structure 13 comprises four fastening points 14 with holes which make it possible to anchor the lower portion 10b firmly to the frame structure 13 by means of bolts or the like. Two support means, in the form of a third gas cylinder 15 and a fourth gas cylinder 16, each have a first end connected pivotably to the stationary portion 3 of the vehicle and a second end connected pivotably to the frame structure 13. The third and fourth gas cylinders 15, 16 are arranged to provide underlying support for the instrument panel 10. The gas cylinders 15, 16 are situated symmetrically relative to the permanent connection 11. The gas cylinders 15, 16 thus constitute symmetrically located support points for the instrument panel 10. The construction of the third and fourth gas cylinders 15, 16 corresponds to that of the first and second gas cylinders 8, 9. Thus in a locked state the third and fourth gas cylinders 15, 16 are not variable in length and in an unlocked state they are variable in length against the action of an internal resistance. A control means 17 is arranged adjacent to the steering wheel 1 at a suitable location in the driving cab. From the control means 17, a wire mechanism 18, which is only schematically depicted in Fig. 2, extends to the locking mechanisms 8a, 9a, 15a, 16a of the respective gas cylinders 8, 9, 15, 16.

The control means 17 is switchable between two different states. When a driver is driving the vehicle, the control means is in a locked first state. This first state results in no pulling force in the wire mechanism 18 to release the locking mechanisms 8a, 9a, 15a, 16a of the respective gas cylinders. In the first state, the gas cylinders 8, 9, 15, 16 are thus locked and their length therefore cannot change. In this situation the first gas cylinder 8 prevents linear movement between the first element 4 and the second element 5 of the adjusting mechanism. The second gas cylinder 9 prevents pivoting movement between the second element 5 and the bearing housing 6. The steering wheel 1 and the instrument panel 10, which are permanently connected to the bearing housing 6, are thus held in the set position between the first gas cylinder 8 and the second gas cylinder 9. At the same time, the gas cylinders 15, 16 are locked and their length likewise cannot change. The gas cylinders 15, 16 thus provide stable support for the instrument panel 10 so that, for example, the latter does not vibrate during operation of the vehicle.

When a driver wishes to adjust the position of the steering wheel 1 and the instrument panel 10, the control means 17 is switched to the second state. The wire mechanism 18 is stretched and the locking mechanisms of the respective gas cylinders 8, 9, 15, 16 are released. The steering wheel 1 and the instrument panel 10 are nevertheless held in the set position by the internal resistance of the respective gas cylinders 8, 9, 15, 16.

However, this internal resistance is such as to be easily overcome by the driver. The driver shifts the steering wheel 1 manually to a desired position in the height direction and pivots it to a desired rotational position. As the instrument panel 10 is permanently connected to the steering wheel 1, corresponding linear and rotational movements are imparted to the instrument panel 10. When the steering wheel 1 and the instrument panel 10 are in a desired position, the driver switches the control means 17 back to the first state. The pulling force in the wire mechanism 18 is reduced and the locking mechanisms 8a, 9a, 15a, 16a of the respective gas cylinders 8, 9, 15, 16 engage. The gas cylinders 8, 9, 15, 16 cannot now change in length. The first and second gas cylinders 8, 9 thus lock the steering wheel 1 in a desired position and the gas cylinders 15, 16 provide stable support for the instrument panel 10.

The invention is in no way limited to the embodiment described but may be varied freely within the scopes of the claims. The support means which is variable in length may be of substantially any desired but functional kind, comprise any desired number of means and be positioned as desired. The release of the locking mechanisms need not be by means of a wire mechanism, as substantially any desired mechanical motion-transmitting mechanism may be used. Alternatively, the locking mechanisms may be released by means of a hydraulically or pneumatically controlled arrangement or the indicated state of the control means may be transmitted by means of an electrical control signal to the respective locking mechanisms. The support means may have an extent between the instrument panel and substantially any desired portion of the vehicle. The portion concerned may be stationary but may also be part of the adjusting mechanism 4, 5.

## Claims

1. A device for adjusting the position of an instrument panel in a vehicle, whereby the vehicle comprises an instrument panel (10), a steering control (1) arranged to be handled by a driver, and an adjusting mechanism (4, 5, 6) which allows variable setting of the position of the steering control (1), which device comprises a permanent connection (11) between the steering control (1) and the instrument panel (10) so that adjustment of the position of the steering control (1) causes a corresponding adjustment of the position of the instrument panel (10), **characterised in that** the device comprises at least one support means (15, 16) which is variable in length and which has an extent between the instrument panel (10) and a portion (3) of the vehicle, whereby the support means (15, 16) comprises a locking mechanism which, in a locked first state, prevents length variation of the support means (15, 16) so that the latter provides support for the instrument panel (10) relative to said stationary portion (3), and which, in an unlocked second state, allows length variation of the support means (15, 16).

2. A device according to claim 1, **characterised in that** the instrument panel comprises a frame structure (13) which itself comprises said permanent connection (11) to the adjusting mechanism.

3. A device according to claim 2, **characterised in that** the support means (15, 16) is connected to the instrument panel (10) via said frame structure (13).

4. A device according to any one of the foregoing claims, **characterised in that** the device comprises a control means (17) which is so arranged that in a first state it allows locking of the steering control (1) in a set position, and in a second state allows adjustment of the steering control (1) to a desired position.

5. A device according to claim 4, **characterised in that** the control means (17) in the first state is arranged to prevent length variation of the support means (15, 16) and in the second state allows length variation of the support means (15, 16).

6. A device according to any one of the foregoing claims, **characterised in that** the support means is a gas cylinder (15, 16) which is variable in length.

7. A device according to claim 6, **characterised in that** the adjusting mechanism comprises at least one gas cylinder (8, 9) which is variable in length and which has a locking mechanism (8a, 9a) making it possible to lock the steering control (1) in a desired position.

8. A device according to claim 7, **characterised in that** the control means (17) is connected to said gas cylinders (8, 9) by means of a mechanical motion-transmitting mechanism.

9. A device according to any one of the foregoing claims, **characterised in that** the adjusting mechanism comprises a first element (4) permanently connected to a stationary portion (3) of the vehicle, a second element (5) arranged for linear movement relative to the first element (4), and a third element (6) which is connected to the steering control (1) and arranged for pivoting relative to the second element (5).

10. A device according to claim 9, **characterised in that** said permanent connection (11) is arranged between the third element (6) of the adjusting mechanism and the instrument panel (10).
